# EUROPÄISCHE PATENTSCHRIFT

(11) **EP 1 108 135 B1**
(45) Veröffentlichungstag und Bekanntmachung des Hinweises auf die Patenterteilung: **22.12.2004**
(21) Anmeldenummer: 00938536.0
(22) Anmeldetag: 11.05.2000
(51) Int. Cl.: F02M 55/00, F16L 41/08

(54) **HOCHDRUCKANSCHLUSS FÜR EIN KRAFTSTOFFEINSPRITZSYSTEM FÜR BRENNKRAFTMASCHINEN**
HIGH-PRESSURE PORT FOR A FUEL INJECTION SYSTEM FOR INTERNAL COMBUSTION ENGINES
RACCORD HAUTE PRESSION POUR UN SYSTEME D'INJECTION DE CARBURANT POUR DES MOTEURS A COMBUSTION INTERNE

(30) Priorität: 15.06.1999 DE 19927145
(43) Veröffentlichungstag der Anmeldung: 20.06.2001
(73) Patentinhaber: ROBERT BOSCH GMBH, 70442 Stuttgart (DE)
(72) Erfinder: BOECKING, Friedrich, D-70499 Stuttgart (DE)
(86) Internationale Anmeldenummer: PCT/DE2000/001471
(87) Internationale Veröffentlichungsnummer: WO 2000/077388

(56) Entgegenhaltungen:
- EP-A- 0 889 231
- DE-A- 19 753 054
- GB-A- 1 593 491
- US-A- 3 449 937
- US-A- 5 172 939

## Beschreibung

### Stand der Technik

Die Erfindung betrifft einen Hochdruckanschluss für ein Kraftstoffeinspritzsystem für Brennkraftmaschinen nach dem Oberbegriff des Anspruchs 1.

Bekannt ist aus der DE-OS 198 08 882 A1 ein Hochdruckanschluss, bei welchem an die Mittenbohrung des Anschlussstutzens eine kegelstumpfförmige Dichtfläche anschließt. Auf diese Dichtfläche wird das entsprechende Gegenstück der Hochdruckleitung mittels einer Spannmutter gepresst. Dadurch ergibt sich eine dichtende Verbindung zwischen Anschlussstutzen und Hochdruckleitung.

Aus der US 5,172,939 ist ein Hochdruckanschluß mit einer kugelförmigen Dichtfläche bekannt. Das Gegenstück des Hochdruckleitung ist ebenfalls kugelförmig, wenn auch mit anderem Durchmesser als die Dichtfläche des Anschlussstutzens. Hochdruckleitung und Anschlusstutzen werden mit Hilfe einer Spannmutter miteinander verspannt. Dazu ist an der Hochdruckleitung ein ringförmiger Bund ausgebildet an dem die Spannmutter aufliegt. Da die Konatktfläche zwischen Spannmutter und Bund eben ist, können Fluchtungsfehler nicht ausgeglichen werden.

Nachteilig an diesen Hochdruckanschlüssen ist, dass die Hochdruckleitung genau in Richtung der Längsachse des Anschlussstutzens verlaufen muss, da der Hochdruck-Anschluss keinen Winkelausgleich zulässt.

Der Erfindung liegt die Aufgabe zugrunde, einen Hochdruckanschluss bereitzustellen, der Fluchtungsfehler zwischen der Längsachse des Anschlussstutzens und der Hochdruckleitung ausgleicht, ohne dass die Dichtheit des Hochdruckanschlusses leidet und ohne dass die Hochdruckleitung unerwünschte Biegespannungen aufnehmen muss.

Diese Aufgabe wird erfindungsgemäß durch einen Hochdruck-Anschluss mit den kennzeichnender Merkmalen des Anspruchs 1 gelöst.

Durch die kugelförmige Ausgestaltung der Dichtfläche, des Gegenstücks und der Spannmutter kann die Hochdruckleitung mit Fluchtungsfehlern in den Anschlussstutzen eingeführt werden, ohne dass dies eine Auswirkung auf die Dichtfläche des Anschlussstutzens und des Gegenstücks hat. Damit bleibt auch in diesen Fällen die Dichtheit des Hochdruckanschlusses in vollem Umfang erhalten. Außerdem werden in die Hochdruckleitung keine unnötigen Biegespannungen eingeleitet, die zu einer erhöhten Werkstoffbeanspruchung führen.

Nach einer Ausgestaltung der Erfindung ist die der Spannmutter zugewandte Kalotte des Gegenstücks als Kugelringscheibe ausgeführt, so dass beim Anziehen der Spannmutter die Hochdruckleitung nicht verdreht wird und außerdem die Kugelringscheibe aus einem anderen Material als die Hochdruckleitung und deren Gegenstück ausgeführt werden kann.

Bei einer anderen Ausführungsform der Erfindung ist zwischen Spannmutter und Gegenstück ein Spannring angeordnet, dessen dem Gegenstück zugewandte Fläche die Form einer Kalotte hat, so dass aufgrund der größeren Baulänge das Setzen des Gegenstücks in der Dichtfläche nur zu einer kleinen Verringerung der Anpresskraft führt.

Bei einer weiteren Variante sind die einander zugewandten Flächen von Spannring und Spannmutter Kreisringflächen, so dass die Reibung zwischen Spannring und Spannmutter minimal wird.

Eine andere Variante der Erfindung sieht vor, dass die Durchgangsbohrungen von Spannmutter und Spannring kegelförmig ausgeführt sind, wobei der Bohrungsdurchmesser mit zunehmendem Abstand zur Dichtfläche zunimmt, so dass auch bei größeren Fluchtungsfehlern die Hochdruckleitung ohne Verformung in den Anschlussstutzen eingeführt und mit diesem verschraubt werden kann.

In Ergänzung der Erfindung ist der Kegelwinkel der Durchgangsbohrungen kleiner oder gleich 10°, so dass durch die Wahl des Kegelwinkels ein maximal zulässiger Fluchtungsfehler festgelegt werden kann.

Erfindungsgemäß wird der Anschlussstutzen mit einem Kraftstoffhochdruckspeicher, dem Gehäuse einer Kraftstoffhochdruckpumpe oder dem Gehäuse eines Einspritzventils verschweißt, so dass der Anschlussstutzen separat hergestellt werden kann und auf einfache und kostengünstige Weise mit dem Kraftstoffhochdruckspeicher oder einem der genannten Gehäuse verbunden werden kann.

Eine andere Variante sieht vor, dass der Anschlussstutzen mit einem Kraftstoffhochdruckspeicher, dem Gehäuse einer Kraftstoffhochdruckpumpe oder dem Gehäuse eines Einspritzventils verschraubt ist, so dass der erfindungsgemäße Hochdruckanschluss auch bei bereits betehenden Einspritzsystemen durch Auswechslung mit den vorhandenen Hochdruckanschlüssen einsetzbar ist.

In weiterer Ausgestaltung der Erfindung ist der Anschlussstutzen und der Kraftstoffhochdruckspeicher, der Anschlussstutzen und das Gehäuse der Kraftstoffhochdruckpumpe oder der Anschlussstutzen und das Gehäuse des Einspritzventils einstückig, insbesondere als Schmiedeteil ausgeführt, so dass die Anzahl der Bauteile und der Fügeverbindungen minimiert wird. Außerdem kann ein günstiger Verlauf der Werkstoffbeanspruchung erzielt werden.

Eine andere Ausführungsform der Erfindung sieht vor, dass die Dichtfläche Teil des Kraftstoffhochdruckspeichers, des Gehäuses der Kraftstoff-Hochdruckpumpe oder des Gehäuses des Einspritzventils ist, so dass die Bauhöhe des erfindungsgemäßen Hochdruck-Anschlusses verringert wird.

Bei einer anderen Variante ist die Dichtfläche Teil des Anschlussstutzens, so dass der Hochdruck-Anschluss unabhängig von den anderen Baugruppen des Kraftstoffeinspritzsystems und kostengünstig hergestellt werden kann. Außerdem ist die geometrische Zuordnung von Anschlusstutzen und Dichtfläche immer gewährt.

Eine Ausgestaltung der Erfindung sieht vor, dass die Spannmutter ein Innengewinde und der Anschlussstutzen ein entsprechendes Außengewinde aufweisen, so dass der Nenndurchmesser des Gewindes deutlich größer als der Außendurchmesser der Dichtfläche ist und somit hohe Anpresskräfte realisierbar sind.

In weiterer Ausgestaltung der Erfindung weisen die Spannmutter ein Außengewinde und der Anschlussstutzen ein entsprechendes Innengewinde auf, so dass der Außendurchmesser des Anschlussstutzens und damit auch der erforderliche Einbauraum minimiert wird.

Die eingangs genannte Aufgabe wird auch gelöst durch ein Kraftstoffeinspritzsystem für Brennkraftmaschinen mit einem Hochdruck-Anschlüsse der einen Anschlussstutzen, eine Hochdruckleitung, eine Spannmutter und eine Dichtfläche aufweist, wobei der Anschlussstutzen eine Bohrung und ein Gewinde aufweist, die konzentrisch zu seiner Längsachse angeordnet sind, wobei die Hochdruckleitung an ihrem Ende ein der Dichtfläche entsprechendes Gegenstück aufweist, das durch die mit dem Anschlussstutzen verschraubte Spannmutter auf die Dichtfläche gepresst ist, und wobei die Dichtfläche und die einander zugewandten Flächen der Spannmutter und des Gegenstücks die Form einer Kalotte haben und die Mittelpunkte der Kalotten den gleichen geometrischen Ort einnehmen.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstands der Erfindung ist in der Zeichnung dargestellt und im Folgenden näher beschrieben. Es zeigen:
- Fig. 1:: eine erste Ausführungsform eines Hochdruckanschlusses und
- Fig. 2:: eine zweite Ausführungsform eines Hochdruckanschlusses mit Kugelringscheibe und Spannring.

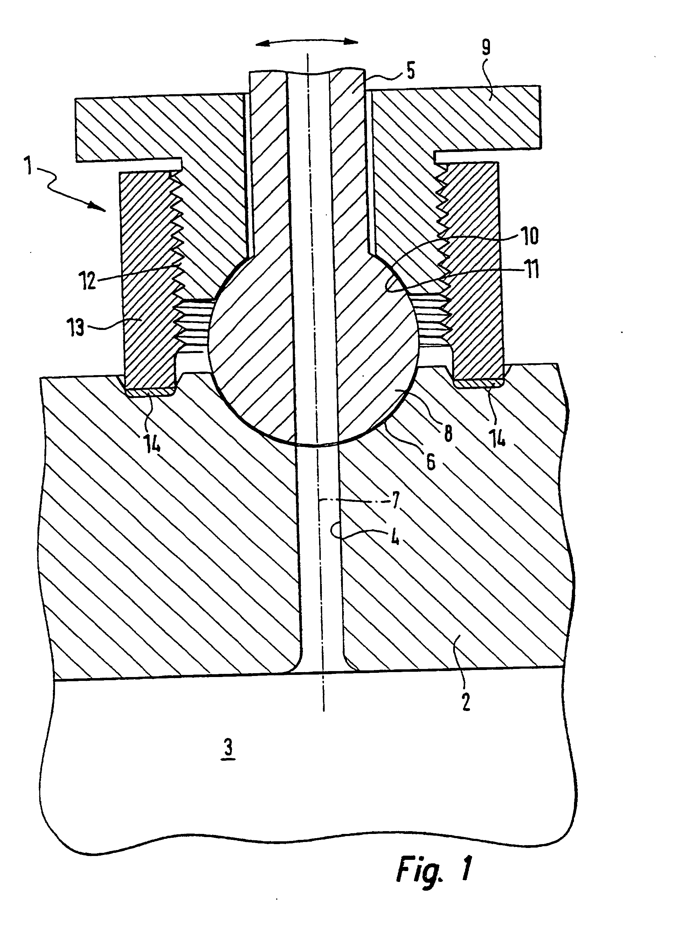

Bei der in Fig. 1 dargestellten Ausführungsform ist ein Hochdruckanschluss 1 mit einer Speicherwand 2 eines Kraftstoffhochdruckspeichers 3 verbunden. Eine Bohrung 4 in der Speicherwand 2 stellt eine hydraulische Verbindung mit einer Hochdruckleitung 5 her. Der Hochdruckanschluss 1 hat die Aufgabe, die hydraulische Verbindung zwischen Bohrung 4 und Hochdruckleitung 5 abzudichten und dabei Fluchtungsfehler zwischen Bohrung 4 und Hochdruckleitung 5 auszugleichen. Eine Dichtfläche 6 in der Speicherwand 2 hat die Form einer Kugeloberfläche (Kalotte), wobei der Mittelpunkt der Kugel bzw. Kalotte in die Längsachse 7 der Bohrung 4 fällt.
Ein mit der Hochdruckleitung 5 verbundenes Gegenstück 8 ist an seinem Ende ebenfalls kugelförmig gestaltet, so dass die Dichtfläche 6 und das Gegenstück 8 ineinanderpassen. Wenn das Gegenstück 8 von einer Spannmutter 9 auf die Dichtfläche 6 gepresst wird, ergibt sich eine flüssigkeitsdichte Verbindung von Hochdruckleitung 5 und Kraftstoffhochdruckspeicher 3.

Im gezeigten Beispiel weist das Gegenstück 8 auf seiner der Spannmutter 9 zugewandten Fläche 10 eine kugelförmige Gestaltung auf. Die dem Gegenstück 8 zugewandte Fläche 11 der Spannmutter 9 ist ebenfalls kugelförmig gestaltet, so dass die Fläche 10 des Gegenstücks 8 und die entsprechende Fläche 11 der Spannmutter 9 ineinanderpassen.

Die Mittelpunkte der kugelförmigen Dichtfläche 6 und des kugelförmigen Teils der Spannmutter 9 befinden sich am gleichen geometrischen Ort. Dadurch ist gewährleistet, dass die von der Spannmutter 9 erzeugte Anpresskraft, welche das Gegenstück 8 in die Dichtfläche 6 presst, unabhängig von einem Fluchtungsfehler der Hochdruckleitung 5 ist.

Die Spannmutter 9 weist ein Außengewinde 12 auf, welches in ein entsprechendes Innengewinde eines Anschlussstutzens 13 eingedreht wird. Im gezeigten Beispiel ist der Anschlussstutzen 13 durch eine Schweißnaht 14 mit der Speicherwand 2 verbunden.

Es ist auch möglich, dass der Anschlussstutzen 13 und die Speicherwand 2 aus einem Teil, z.B. durch Schmieden, hergestellt sind, oder dass die Dichtfläche 6 und der Anschlussstutzen 13 einteilig ausgeführt sind und dieses Bauteil als Ganzes mit der Speicherwand 2 verschweißt ist. Unabhängig davon bleibt trotz eines Fluchtungsfehlers der Hochdruckleitung 5 die zwischen Gegenstück 8 und Dichtfläche 6 wirkende Anpresskraft unverändert und ohne Querkraftkomponente wirksam.

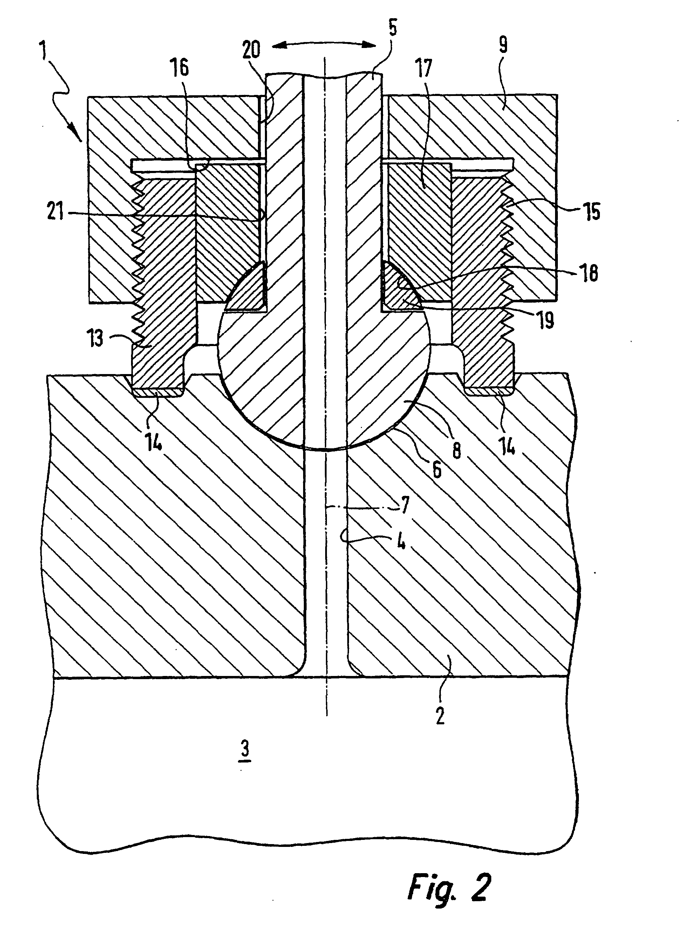

In Fig. 2 ist ein anderes Ausführungsbeispiel der Erfindung dargestellt. Bei dieser Ausführungsform ist die Spannmutter 9 als Überwurfmutter ausgeführt, die mit ihrem Innengewinde 15 in ein entsprechendes Außengewinde des Anschlussstutzens 13 eingedreht ist. Ein Bund 16 der Spannmutter 9 überträgt die Anpresskraft auf einen Spannring 17. Der Spannring 17 weist auf seiner dem Gegenstück 8 zugewandten Fläche eine kugelförmige Ausnehmung 18 auf, die mit einer Kugelringscheibe 19 zusammenwirkt. Die Anpresskraft wird also von der Spannmutter 9 über den Spannring 17 und die Kugelringscheibe 19 auf das Gegenstück 8 und schließlich auf die Dichtfläche 6 übertragen.

Vorteilhaft an dieser Ausführungsform ist, dass Spannmutter 9, Spannring 17, Kugelringscheibe 19 und Gegenstück 8 jeweils aus verschiedenen Materialien hergestellt werden können, so dass den Anforderungen, die an jedes der genannten Bauteile gestellt werden, in optimaler Weise entsprochen werden kann. So ist beispielsweise die Druckfestigkeit des Gegenstücks 8 von großer Bedeutung. Die Kugelringscheibe 19 sollte neben einer guten Druckfestigkeit auch einen geringen Reibungskoeffizienten aufweisen, damit die Drehbewegung, die von der Spannmutter 9 möglicherweise durch den Spannring 17 übertragen wird, nicht auf das Gegenstück 8 weiterübertragen wird. Ein derartiges Verdrehen des Gegenstücks 8 würde zu einer Torsion der Hochdruckleitung 5 und damit zu einer unnötigen und unerwünschten Beanspruchung der Hochdruckleitung 5 führen.

Bei der in Fig. 2 dargestellten Ausführungsform kann die Steifigkeit des Hochdruckanschlusses bezüglich der von der Spannmutter 9 aufgebrachten Anpresskraft in weiten Grenzen konstruktiv beeinflusst werden. Indem der Spannring 17 länger und aus einem Material mit geringem Elastizitätsmodul ausgeführt wird, baut sich die Anpresskraft erst nach einer größeren Drehbewegung der Spannmutter 9 auf. Dies hat den Vorteil, dass die Anpresskraft genauer eingestellt werden kann und ein eventuell vorhandenes Setzen zwischen Dichtfläche 6 und Gegenstück 8 bzw. einer oder mehreren der anderen Kontaktflächen zwischen Gegenstück 8 und Kugelringscheibe 19 oder Kugelringscheibe 19 und Spannring 17 oder Spannring 17 und Bund 16 nur zu einem geringen Abfall der Anpresskraft führt.

Im gezeigten Beispiel wird die Hochdruckleitung 5 durch eine Bohrung 20 der Spannmutter 9 und eine Bohrung 21 des Spannrings 17 geführt. In Fig. 2 ist der Durchmesser der Bohrung 20 der Spannmutter 9 und der Bohrung 21 des Spannrings 17 nicht viel größer als der Außendurchmesser der Hochdruckleitung 5. Damit ist der maximal mögliche Fluchtungsfehler der Hochdruckleitung 5 bezüglich der Bohrung 4 konstruktiv festgelegt. Wenn die Bohrungen 20 und 21 kegelig ausgeführt werden, und zwar so, dass mit größer werdendem Abstand von der Dichtfläche 6 der Bohrungsdurchmesser zunimmt, kann der maximal mögliche Fluchtungsfehler sehr viel größer werden.

In dem gezeigten Beispiel ist der Anschlussstutzen 13 mit der Speicherwand 2 durch Schweißnähte 14 verbunden. Dies muss ebenso wie bei dem in Fig. 1 dargestellten Ausführungsbeispiel nicht notwendigerweise so sein.

## Patentansprüche

1. Hochdruck-Anschluss (1) für ein Kraftstoffeinspritzsystem für Brennkraftmaschinen mit einem. Anschlussstutzen (13), einer Hochdruckleitung (5), einer Spannmutter (9) und einer kalottenförmigen Dichtfläche (6), wobei der Anschlussstutzen (13) eine Bohrung und ein Gewinde aufweist, die konzentrisch zu seiner Längsachse (7) angeordnet sind und wobei die Hochdruckleitung (5) an ihrem Ende ein der Dichtfläche (6) entsprechendes Gegenstück (8) aufweist, das durch die mit dem Anschlussstutzen (13) verschraubte Spannmutter (9) auf die Dichtfläche (6) gepresst ist, **dadurch gekennzeichnet, dass** die einander zugewandten Flächen (10, 11) der Spannmutter (9) und des Gegenstücks (8) die Form einer Kalotte haben und dass die Mittelpunkte der Kalotten der Dichtfläche (6) und der Spannmutter (9) den gleichen geometrischen Ort einnehmen.

2. Hochdruck-Anschluss (1) nach Anspruch 1, **dadurch gekennzeichnet, dass** die der Spannmutter (9) zugewandte Kalotte des Gegenstücks (8) als Kugelringscheibe (19) ausgeführt ist.

3. Hochdruck-Anschluss (1) nach einem der vorhergehenden Ansprüche, **dadurch gekennzeichnet, dass** zwischen Spannmutter (9) und Gegenstück (8) ein Spannring (17) angeordnet ist, dessen dem Gegenstück (8) zugewandte Fläche die Form einer Kalotte hat.

4. Hochdruck-Anschluss (1) nach Anspruch 3, **dadurch gekennzeichnet, dass** die einander zugewandten Flächen von Spannring (17) und Spannmutter (9) Kreisringflächen sind.

5. Hochdruck-Anschluss (I) nach einem der vorhergehenden Ansprüche, **dadurch gekennzeichnet, dass** die Durchgangsbohrungen (20, 21) von Spannmutter (9) und Spannring (17) kegelförmig ausgeführt sind, wobei der Bohrungsdurchmesser mit zunehmendem Abstand zur Dichtfläche (6) zunimmt.

6. Hochdruck-Anschluss (1) nach Anspruch 5, **dadurch gekennzeichnet, dass** der Kegelwinkel der Durchgangsbohrungen (20, 21) kleiner oder gleich 10° ist.

7. Hochdruck-Anschluss (1) nach einem der vorhergehenden Ansprüche, **dadurch gekennzeichnet, dass** der Anschlussstutzen (13) mit einem Kraftstoffhochdruckspeicher (3), dem Gehäuse einer Kraftstoff-Hochdruckpumpe oder dem Gehäuse eines Einspritzventils verschweißt ist.

8. Hochdruck-Anschluss (1) nach einem der Ansprüche 1 bis 6, **dadurch gekennzeichnet, dass** der Anschlussstutzen (13) mit einem Kraftstoffhochdruckspeicher (3), dem Gehäuse einer Kraftstoff-Hochdruckpumpe oder dem Gehäuse eines Einspritzventils verschraubt ist.

9. Hochdruck-Anschluss (1) nach einem der Ansprüche 1 bis 6, **dadurch gekennzeichnet, dass** der Anschlussstutzen (13) und der Kraftstoffhochdruckspeicher (3), der Anschlussstutzen und das Gehäuse der Kraftstoff-Hochdruckpumpe oder der Anschlussstutzen und das Gehäuse des Einspritzventils einstückig, insbesondere als Schmiedeteil, ausgeführt sind.

10. Hochdruck-Anschluss (1) nach einem der Ansprüche 1 bis 8, **dadurch gekennzeichnet, dass** die Dichtfläche (6) Teil des Kraftstoffhochdruckspeichers (3), des Gehäuses der Kraftstoff-Hochdruckpumpe oder des Gehäuses des Einspritzventils ist.

11. Hochdruck-Anschluss (I) nach einem der Ansprüche 1 bis 8, **dadurch gekennzeichnet, dass** die Dichtfläche (6) Teil des Anschlussstutzens (13) ist.

12. Hochdruck-Anschluss (1) nach einem der vorhergehenden Ansprüche, **dadurch gekennzeichnet, dass** die Spannmutter (9) ein Innengewinde (15) und der Anschlussstutzen (13) ein entsprechendes Außengewinde aufweisen.

13. Hochdruck-Anschluss (1) nach einem der Ansprüche 1 bis 11, **dadurch gekennzeichnet, dass** die Spannmutter (9) ein Außengewinde (12) und der Anschlussstutzen (13) ein entsprechendes Innengewinde aufweist.

14. Kraftstoffeinspritzsystem für Brennkraftmaschinen mit einem Hochdruck-Anschluss (1), **dadurch gekennzeichnet, dass** der Hochdruck-Anschluß ein Hochdruck-Anschluß nach einem der vorhergehenden Ansprüche ist.

## Claims

1. High-pressure connection (1) for a fuel injection system for internal combustion engines, having a connector (13), a high-pressure line (5), a clamping nut (9) and a dome-shaped sealing surface (6), the connector (13) having a bore and a thread which are arranged concentrically with its longitudinal axis (7), and the high-pressure line (5) having, at its end, a counterpart (8) which corresponds to the sealing surface (6) and is pressed onto the sealing surface (6) by means of the clamping nut (9) which is screwed to the connector (13), **characterized in that** the mutually facing surfaces (10, 11) of the clamping nut (9) and of the counterpart (8) are in the form of a dome, and **in that** the centre points of the domes of the sealing surface (6) and the clamping nut (9) occupy the same geometrical location.

2. High-pressure connection (1) according to Claim 1, **characterized in that** that dome of the counterpart (8) which faces the clamping nut (9) is designed as a ball-race-type disc (19).

3. High-pressure connection (1) according to one of the preceding claims, **characterized in that** a clamping ring (17) whose surface which faces the counterpart (8) is in the form of a dome is arranged between the clamping nut (9) and counterpart (8).

4. High-pressure connection (1) according to Claim 3, **characterized in that** the mutually facing surfaces of the clamping ring (17) and clamping nut (9) are circular ring surfaces.

5. High-pressure connection (1) according to one of the preceding claims, **characterized in that** the through bores (20, 21) of the clamping nut (9) and clamping ring (17) are of conical design, with the bore diameter increasing with increasing distance from the sealing surface (6).

6. High-pressure connection (1) according to Claim 5, **characterized in that** the cone angle of the through bores (20, 21) is smaller than or equal to 10°.

7. High-pressure connection (1) according to one of the preceding claims, **characterized in that** the connector (13) is welded to a fuel high-pressure store (3), the housing of a fuel high-pressure pump or the housing of an injection valve.

8. High-pressure connection (1) according to one of Claims 1 to 6, **characterized in that** the connector (13) is screwed to a fuel high-pressure store (3), the housing of a fuel high-pressure pump or the housing of an injection valve.

9. High-pressure connection (1) according to one of Claims 1 to 6, **characterized in that** the connector (13) and the fuel high-pressure store (3), the connector and the housing of the fuel high-pressure pump or the connector and the housing of the injection valve are designed as a single part, in particular as a forged part.

10. High-pressure connection (1) according to one of Claims 1 to 8, **characterized in that** the sealing surface (6) is part of the fuel high-pressure store (3), the housing of the fuel high-pressure pump or the housing of the injection valve.

11. High-pressure connection (1) according to one of Claims 1 to 8, **characterized in that** the sealing surface (6) is part of the connector (13).

12. High-pressure connection (1) according to one of the preceding claims, **characterized in that** the clamping nut (9) has an internal thread (15) and the connector (13) has a corresponding external thread.

13. High-pressure connection (1) according to one of Claims 1 to 11, **characterized in that** the clamping nut (9) has an external thread (12) and the connector (13) has a corresponding internal thread.

14. Fuel injection system for internal combustion engines having a high-pressure connection (1), **characterized in that** the high-pressure connection is a high-pressure connection according to one of the preceding claims.

## Revendications

1. Raccord haute pression (1) pour un système d'injection de carburant pour moteurs à combustion interne, comportant un embout de raccordement (13), une conduite haute pression (5), un écrou de serrage (9) et une surface d'étanchéité (6) en forme de calotte, l'embout de raccordement (13) présentant un alésage et un filetage concentriques par rapport à son axe longitudinal (7), et la conduite haute pression (5) présentant au niveau de son extrémité une contre-pièce (8) correspondant à la surface d'étanchéité (6) et pressée sur la surface d'étanchéité (6) par l'écrou de serrage (9) vissé avec l'embout de raccordement (13),
**caractérisé en ce que**
les surfaces (10, 11) de l'écrou de serrage (9) et de la contre-pièce (8) tournées l'une vers l'autre présentent la forme d'une calotte, et les points médians des calottes de la surface d'étanchéité (6) et de l'écrou de serrage (9) occupent le même lieu géographique.

2. Raccord haute pression (1) selon la revendication 1,
**caractérisé en ce que**
la calotte de la contre-pièce (8) tournée vers l'écrou de serrage (9) est configurée sous forme de disque annulaire sphérique (19).

3. Raccord haute pression (1) selon l'une des revendications précédentes,
**caractérisé en ce qu'**
entre l'écrou de serrage (9) et la contre-pièce (8) est disposé un anneau de serrage (17) dont la surface tournée vers la contre-pièce (8) présente la forme d'une calotte.

4. Raccord haute pression (1) selon la revendication 3,
**caractérisé en ce que**
les surfaces de l'anneau de serrage (17) et de l'écrou de serrage (9) tournées l'une vers l'autre sont des surfaces annulaires sphériques.

5. Raccord haute pression (1) selon l'une des revendications précédentes,
**caractérisé en ce que**
les alésages traversants (20, 21) de l'écrou de serrage (9) et de l'anneau de serrage (17) sont configurés en forme de cône, le diamètre des alésages augmentant à mesure que la distance par rapport à la surface d'étanchéité (6) augmente.

6. Raccord haute pression (1) selon la revendication 5,
**caractérisé en ce que**
l'angle de pointe des alésages traversants (20, 21) est inférieur ou égal à 10°.

7. Raccord haute pression (1) selon l'une des revendications précédentes,
**caractérisé en ce que**
l'embout de raccordement (13) est soudé avec un accumulateur haute pression de carburant (3), avec le boîtier d'une pompe haute pression de carburant ou avec le boîtier d'une soupape d'injection.

8. Raccord haute pression (1) selon l'une des revendications 1 à 6,
**caractérisé en ce que**
l'embout de raccordement (13) est vissé avec un accumulateur haute pression de carburant (3), avec le boîtier d'une pompe haute pression de carburant ou avec le boîtier d'une soupape d'injection.

9. Raccord haute pression (1) selon l'une des revendications 1 à 6,
**caractérisé en ce que**
l'embout de raccordement (13) et l'accumulateur haute pression de carburant (3), l'embout de raccordement et le boîtier de la pompe haute pression de carburant ou l'embout de raccordement et le boîtier de la soupape d'injection sont configurés en une seule pièce, en particulier en tant que pièce forgée.

10. Raccord haute pression (1) selon l'une des revendications 1 à 8,
**caractérisé en ce que**
la surface d'étanchéité (6) est une partie de l'accumulateur haute pression de carburant (3), du boîtier de la pompe haute pression de carburant ou du boîtier de la soupape d'injection.

11. Raccord haute pression (1) selon l'une des revendications 1 à 8,
**caractérisé en ce que**
la surface d'étanchéité (6) est une partie de l'embout de raccordement (13).

12. Raccord haute pression (1) selon l'une des revendications précédentes,
**caractérisé en ce que**
l'écrou de serrage (9) présente un filetage intérieur (15) et l'embout de raccordement (13) présente un filetage extérieur correspondant.

13. Raccord haute pression (1) selon l'une des revendications 1 à 11,
**caractérisé en ce que**
l'écrou de serrage (9) présente un filetage extérieur (12) et l'embout de raccordement (13) présente un filetage intérieur correspondant.

14. Système d'injection de carburant pour moteurs à combustion interne comportant un raccord haute pression (1),
**caractérisé en ce que**
le raccord haute pression est un raccord haute pression selon l'une des revendications précédentes.
